Europäisches Patentamt

European Patent Office

Office européen des brevets

(11) Publication number: **0 172 615**
A2

# (12) EUROPEAN PATENT APPLICATION

(21) Application number: **85304092.1**

(22) Date of filing: **10.06.85**

(51) Int. Cl.⁴: **G 02 F 1/133**
**G 09 F 9/35**

(30) Priority: **12.06.84 JP 86840/84**

(43) Date of publication of application:
**26.02.86 Bulletin 86/9**

(84) Designated Contracting States:
**DE FR GB IT**

(71) Applicant: **Wacom Co., Ltd.**
**5-23-4, Sakurada Washinomiya-cho**
**Kitakatsushika-gun Saitama-ken, 340-02(JP)**

(72) Inventor: **Eto, Yoji**
**World House 3-44-2, Takadanobaba**
**Shinjuku-ku Tokyo 160(JP)**

(72) Inventor: **Sawa, Hideo**
**205 Tsutsumi Heights 5-36, Higashi 2-chome**
**Kuki-shi Saitama-ken 346(JP)**

(74) Representative: **Harrison, David Christopher et al,**
**MEWBURN ELLIS & CO 2/3 Cursitor Street**
**London EC4A 1BQ(GB)**

(54) Liquid crystal panel display apparatus.

(57) A liquid crystal panel display apparatus has a generally rectangular tabular light guide plate (10) having a flat upper surface (11), the underside of the light guide plate having at least one tapered surface (15,16) which extends from near one longitudinal end of the light guide plate towards the other end such as to progressively approach the flat upper surface of the light guide plate. The tapered surface is provided with fine convexities and concavities. The apparatus further has a liquid crystal cell device (50) provided on the portion of the upper surface opposing the tapered surface. Light from a light source (30,40) is introduced into the light guide plate and is spread uniformly over the entire area of the portion of the flat upper surface opposing the tapered surface of the light guide plate so as to obtain a uniform illumination over the entire area of the liquid crystal cell device. Only a thin light guide plate and a reflecting mirror need be disposed under the liquid crystal cell device. Consequently, this liquid crystal PAD can be used on a digitizer.

./...

# FIG. 2

# LIQUID CRYSTAL PANEL DISPLAY APPARATUS

The present invention relates to a transmission-type liquid crystal panel display apparatus suited to use on, for example, a tablet-type inputting device by being superposed to such an inputting device.

In recent years, there has been an increasing demand for a tablet-type inputting device referred to as a "digitizer", as a means for inputting data, in particular image information, to computers.

In using the digitizer, the user is obliged to confirm correct recognition of the inputted patterns and characters or whether the position appointing means has appointed the correct position, by watching alternatingly both the tablet and a CRT display remote from the tablet or, alternatively, by obtaining a hard copy after the completion of inputting operation, such a confirmation is very labourious and troublesome.

In order to obviate this problem, it has been proposed to use a flat tabular display apparatus which is suited to be placed on the tablet. By using such a display apparatus, the user can confirm the inputted data on the tablet through the display apparatus superposed to the tablet. The digitizer, however, becomes insensitive when the distance between itself and the position appointing device is too large, so that the tabular display apparatus has to have a thickness small enough to maintain the digitizer sensitive. For this reason, there is an increasing demand for a display apparatus having a small thickness of an order of 2 to 3 cm.

Hitherto, a liquid crystal panel display apparatus has been known as a flat tubular display means which can provide a large display area with a comparatively small electric power consumption. There are two types of liquid crystal panel display apparatus: namely, a reflection type in which a reflection surface is provided behind the liquid crystal cells over the entire diplay area, and a transmission type in which an illumination device is provided behind the liquid crystal cells.

The reflection type display apparatus, however, is not suited to the use on the tablet of a digitizer because the user's hand holding the position appointing device such as a stylus pen shades the display undesirably.

In the case of the transmission type liquid panel display, the illumination needs to be arranged only around the area behind the liquid crystal cells because the light from the illuminating device can reach all liquid crystals practically satisfactorily, provided that the display area is sufficiently small. However, the liquid crystal panel display apparatus, when used on a digitizer, is required to have a substantial area so that the illumination has to be disposed behind the liquid crystal cells over the entire display area.

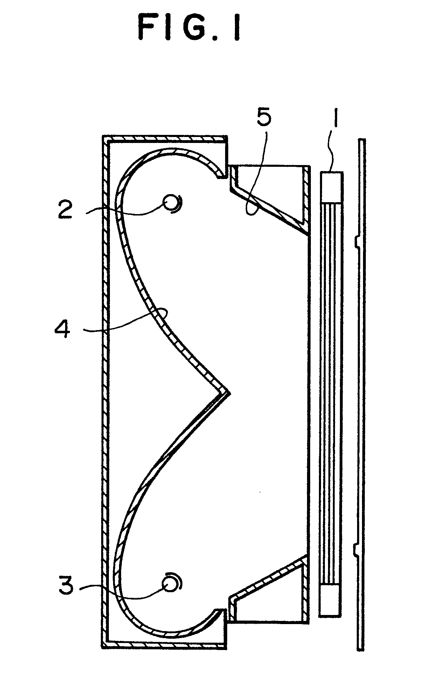

Fig. 1 shows in section a typical conventional liquid crystal panel display apparatus of the kind described. This apparatus has liquid crystal cells 1, linear light sources such as fluorescent tubes 2,3, reflection mirror 4, and a hood 5. The arrangement is such that the light from the linear light sources 2,3 is reflected and uniformalized by the reflecting mirror 4 and the uniform light is applied to the rear side of the liquid crystal cells 1. The light is then scattered in accordance with the states of the liquid crystal cells 1 such as to form an image. In this ordinary display apparatus, however, the total thickness of the reflecting mirror 4 and the hood 5 is as large as about 30 cm. If this thick display apparatus is superposed to the digitizer, the digitizer is inevitably inseisitive to the signal from the position appointing device so that the inputting of data is failed completely.

Accordingly, a first object of the invention is to provide a liquid crystal panel display apparatus comprising: a generally rectangular tabular light guide plate having a flat upper surface, the underside of the light guide plate having at least one tapered surface which extends from a portion of the light guide plate near one longitudinal end surface of the light guide plate towards the other end such as to progressively approach the flat upper surface of the light guide plate, the portion of the upper surface opposing the tapered surface presenting an area on which liquid crystal cells are to be seated.

According to this arrangement, the greater part of the light introduced through one end surface of the light guide plate and reaching the tapered surface is totally reflected and radiated to the upper surface of the liquid guide plate. In general, the light coming into the light guide plate through the incident end surface is attenuated as it travels through the light guide plate to the other end of the plate which is remote from the light source, so that the other end receives a smaller quantity of light than the incident end does. However, according to the invention, the totally reflected light is concentrated in the area near the other end of the light guide plate, so that light is uniformly emitted from the portion of the upper surface of the light guide plate opposing the tapered lower surface of the same. Therefore, all liquid crystal cells can be illuminated uniformly, even when the dislpay apparatus has a substantial area.

A second object of the invention is to provide a liquid crystal panel display apparatus of the type mentioned above, further comprising fine convexities and concavities formed on the tapered surface of the light guide plate, and a reflecting mirror disposed such as to oppose the tapered surface of the light guide plate.

According to this arrangement, the light introduced through one end surface of the light guide plate is irregularly reflected by the fine convexities and concavities on the tapered surface of the light guide plate, and the portion of the light directed to the reflecting mirror is reflected by the mirror towards the upper surface of the light guide plate such as to be emitted uniformly and efficiently from the portion of the upper surface of the light guide plate opposite the tapered surface.

A third object of the invention is to provide a liquid crystal panel display apparatus having a light source disposed in the vicinity of one end surface of the light guide plate. With this arrangement, the overall thickness of the transparency apparatus as a whole can be reduced because the light source is not disposed under the light guide plate and because only the light guide plate and the reflecting mirror which are thin are to be disposed under the liquic crystal cells. In consequence, it becomes possible to use the liquid crystal display apparatus while the same is placed on a digitizer.

A fourth object of the invention is to provide a simple and inexpensive liquid crystal panel display apparatus which can be constituted by easily available parts such as an acrylic plate, reflecting mirror and so forth, without necessitating the use of a special light source such as EL light-emitting elements.

The above and other objects, features and advantages of the invention will become clear from the following description of the preferred embodiments when the same is read in conjunction with the accompanying drawings.

BRIEF DESCRIPTION OF THE DRAWINGS

Fig. 1 is a sectional view of an example of a conventional liquid crystal panel display apparatus;

Fig. 2 is an exploded perspective view of an essential portion of a liquid crystal panel display apparatus of the invention;

Fig. 3 is a sectional view showing how the light passes through a liquid guide plate used in the apparatus of the invention;

Fig. 4 is a partly cut-away perspective view of a liquid crystal panel display apparatus in accordance with the invention;

Fig. 5 is a fragmentary sectional view of the liquid crystal panel display apparatus shown in Fig. 4;

Fig. 6 is a schematic perspective view of a liquid crystal panel display apparatus of the invention combined with a data inputting tablet device;

Fig. 7 is a partly cut-away exploded perspective view of a major part of the tablet device;

Fig. 9 is a circuit diagram showing a practical arrangement of a driving power source;

Fig. 10 is a sectional view of an example of a magnetic pen;

Fig. 11 is an electric circuit diagram showing the electric circuit of the magnetic pen;

Fig. 12 is a block diagram of an essential portion of the tablet device;

Fig. 13 is a chart showing the relationship between the magnetic bias and the magnetic permeability;

Fig. 14 is a graph showing an example of induction voltage induced in each X-direction detecting line; and

Fig. 15 is an illustration showing the manner in which the position is appointed by the magnetic pen.

DESCRIPTION OF THE PREFERRED EMBODIMENTS

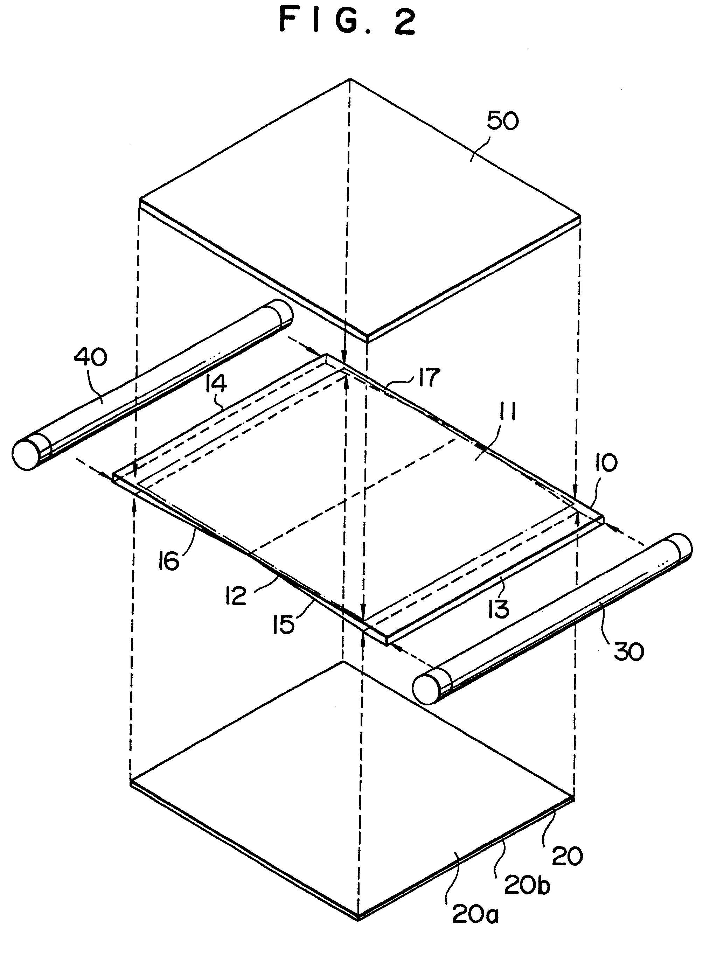

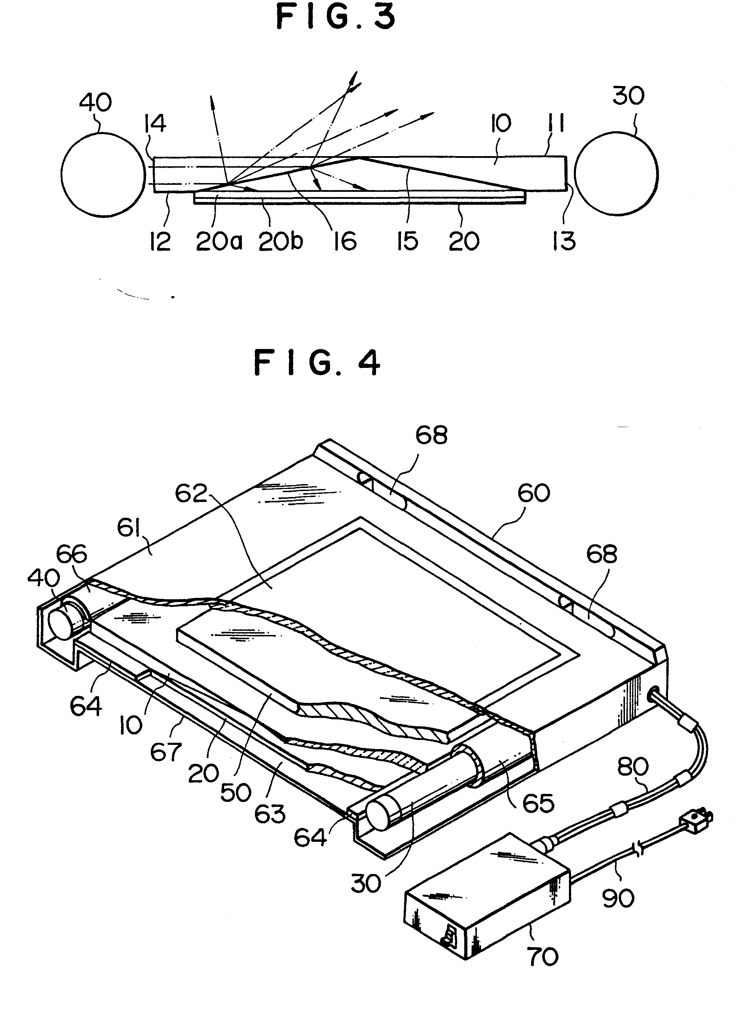

Figs. 2 and 3 in combination show an essential portion of a liquid crystal panel display apparatus in accordance with the invention. The liquid crystal panel display apparatus has a light guide plate 10, a reflecting mirror 20, a pair of light sources 30, 40 such as fluorescent tubes, and a liquid crystal device of matrix driving type which is known per se. The light guide plate 10 is made of a transparent material such as a colorless transparent acrylic resin, and has a flat upper surface 11.    As will be best seen from Fig. 2, the underside of the light guide plate 10 has a pair of tapered surfaces 15 and 16 which start at regions near the opposite longitudinal ends of the light guide plate 10 and converge upwardly, i.e., towards the upper surface 11, substantially at the lengthwise mid point of the light guide plate 10.    The tapered surfaces 15 and 16 are provided with fine convexities and concavities. The reflecting mirror 20 consists of a colorless transparent plate 20a of an acrylic resin which is lined on its under side with a reflector having a reflecting surface 20b. The reflecting mirror 20 is disposed such as to oppose the tapered surfaces 15 and 16 of the light guide plate 10. The fluorescent tubes 30 and 40 are disposed in the vicinity of respective longitudinal ends 13 and 14 of the light guide plate 10.

The liquid crystal cell device 50 is mounted on the portion 17 of the upper surface 11 of the light guide plate 10 opposing the tapered surfaces 15 and 16.

According to this arrangement, most of the light coming into the light guide plate 10 through the end surfaces 13 and 14 and reaching the tapered surfaces 15 and 16 is totally reflected and radiated towards the center of the upper surface 11 of the light guide plate 10. However, a part of the light reaching the tapered surfaces 15 and 16 is reflected irregularly and randomly towards the upper surface 11 by virture of the presence of the fine convexities and concavities. If the light guide plate 10 does not have the tapered surfaces 15 and 16, and if there is no reflecting mirror 20, the central portion of the upper surface 11 of the light guide plate 10 which is remote from the flurrescent tubes 3 and 4 constituting the light sources will receive a smaller quantity of light than both end portions of the same because of attenuation of the light due to long travel of the same. According to the invention, however, partly because the totally reflected light is concentrated in the central portion of the upper surface and partly because the central portion of the upper surface 11 of the light guide plate 10 can receive a greater quantity of light reflected from the mirror 20 than both end portions of the same, the portion 17 of the upper surface 11 opposing the tapered surfaces 15 and 16 can emit the light substantially uniformly over the entire area thereof. Therefore, the liquid crystal cell device 50 placed on the portion 17 can be illuminated uniformly.

It will be understood that, since only a thin light guide plate 10 and a reflecting mirror 20 are placed under the liquid cell device 50, the display portion of the liquid crystal panel display apparatus can have a thickness which is small enough to make a digitizer operate in response to signals delivered through the liquid crystal panel display apparatus. In Fig. 3, the thickness of the light guide plate 10 is shown in a somewhat exaggerated manner as compared with the length thereof, for the purpose of clarification of the drawing.

In the described embodiment of the invention, the reflecting mirror 20 has the acrylic resin plate so that the light guide plate 10 emits white light. This, however, is not exclusive and the reflecting mirror 20 can have a transparent glass plate or a plate having a color other than white in place of the acrylic resin plate 20a, if it is not necessary to obtain white light. It is also possible to use a material having a specific color as the material of the light guide plate 10 and the transparency observation plate so that the light guide plate 10 or the transparency observation plate are able to emit the light of the specific color.

In the illustrated embodiment of the invention, the light guide plate 10 has two tapered surfaces. The light guide plate 10, however, can have four or more such tapered surfaces or, alternatively, the underside of the light guide plate 10 may be conically concaved such that the central portion of the light guide plate has the smallest thickness. When two or more tapered surfaces are provided, or when the tapered surfaces is substituted by a conically concaved surface, the light sources should be disposed on each side of the light guide plate 10.

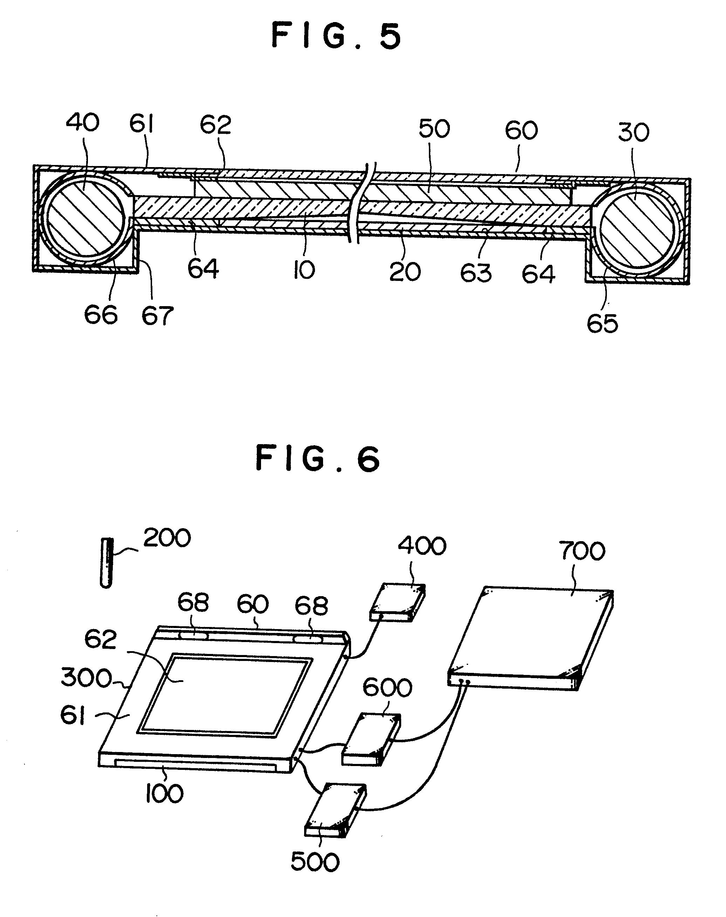

Figs. 4 and 5 show the whole portion of the liquid crystal panel display apparatus in accordance with the invention. The apparatus has a casing 60, a driving unit 70, a connection cord 80 and a power supply cord 90. The casing 60 is constituted by a stainless steel sheet which is bent in a substantially U-shaped cross-section such as to have recesses for receiving the fluorescent tubes 30 and 40 at both longitudinal ends thereof. The light guide plate 10, the reflecting mirror 20 and the liquid crystal cell device 50 are interposed between these recesses.

The portion of the upper surface 61 of the casing 60 of the apparatus corresponding to the liquid crystal cell device 50 is opened and is covered by a protective cover 62 which is made of a white translucent acrylic resin. The casing 60 of the apparatus is protruded at its central portion such as to provide a land portion 63 of a substantial area. The reflecting mirror 20 and the liquid crystal cell device 50 are seated on this land portion 63, while the light guide plate 10 is placed on the land portion 63 through the intermediary of a spacer 64.

Reflectors 65 and 66 each having an arcuate cross-section are disposed under the fluorescent tubes 30 and 40 such as not to cover the portions of the fluorescenttubes opposing the end surfaces 13 and 14 of the light guide plate 10. A tablet-receiving portion 67 for receiving a tablet (not shown) is formed under the land portion 63 of the casing 60. The fluorescent lamps 30 and 40 are attached to the casing 60 through sockets which are not shown and are electrically connected to the driving unit 70 through the connection cord 80.

The driving unit 70 is composed of a ballast, switches and other parts which are known per se, and is connected to a commercial electric power supply through the power supply cord 90. No explanation will be needed for the driving circuit for the liquid crystal cell device 50 because the manner of operation of this device is well known.

When this liquid crystal panel display apparatus is used, the apparatus as a whole is placed on a digitizer such that the tablet of the digitizer is received in the tablet-receiving recess 67 formed under the land portion 63 of the casing 60, and then the power switch of the driving unit 70 is turned on. Thereafter, the power supplies for the processor (explained later) of the digitizer and the driving circuit for the liquid crystal cell device 50 are turned on. Then, the user operates the position appointing device (not shown) on the surface of the protective cover 62, so that the data is inputted to the tablet through the casing 60 and, at the same time, the result of the inputting operation is shown in the display formed by the liquid crystal cell device 50.

The apparatus of the invention can be used also as a mere transparency apparatus for inputting an image data. In such a case, the liquid crystal cell device 50 is not operated, while the fluorescent lamps 30 and 40 are lit. The user then places an original such as a positive or negative photographic film, Roentgen photograph or the like. As the user traces the image on the original by means of the position appointing means, the image date is inputted to the digitizer through the display apparatus.

The tablet of the digitizer used in combination with the transparency apparatus of the invention may be of any desired type, provided that it is sensitive to the movement of the position appointing device at a height of about 2 to 3 cm above the tablet.

In the illustrated embodiment, the tapered surfaces 15 and 16 are slightly offset to the right from the center of the light guide plate 10, in order to align the light-emitting portion 17 of the transparency apparatus with the data input area of the tablet. Apertures 68 which are formed in a rear portion of the casing 60 of the apparatus permit an ultrasonic timing signal to pass therethrough from a transmitter on the position appointing device to a receiver (not shown) on the tablet.

Hereinunder, a description will be made as to an example of an apparatus which is constituted by a combination of a liquid crystal panel display apparatus of the type described and a tablet type input device.

Refering to Fig. 6 which shows the outline of an embodiment of the invention, the coordinate input device of the invention generally has a tablet 100 for inputting the coordinate data, a position appointing magnetism generator (referred to simply as "magnetic pen", hereinunder) for appointing the coordinate position, a liquid crystal panel display 300 of the invention superposed on .the tablet 100, a driving current source 400 adapted to produce an A.C. current of any desired waveform such as sine-wave form, rectangular waveform, triangular waveform and so forth at a predetermined frequency, a position detecting circuit for detecting the coordinate values of the position apointed by the magnetic pen 200 on the tablet 100, a display control circuit for driving the dispay 300, and a processor 700.

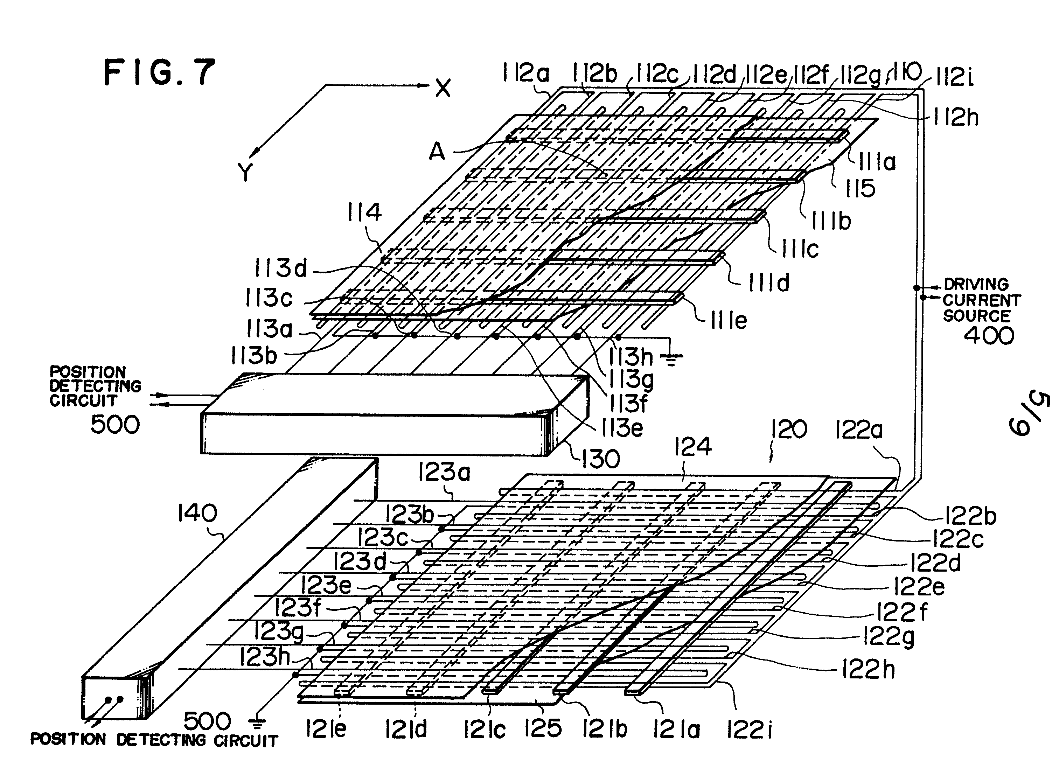

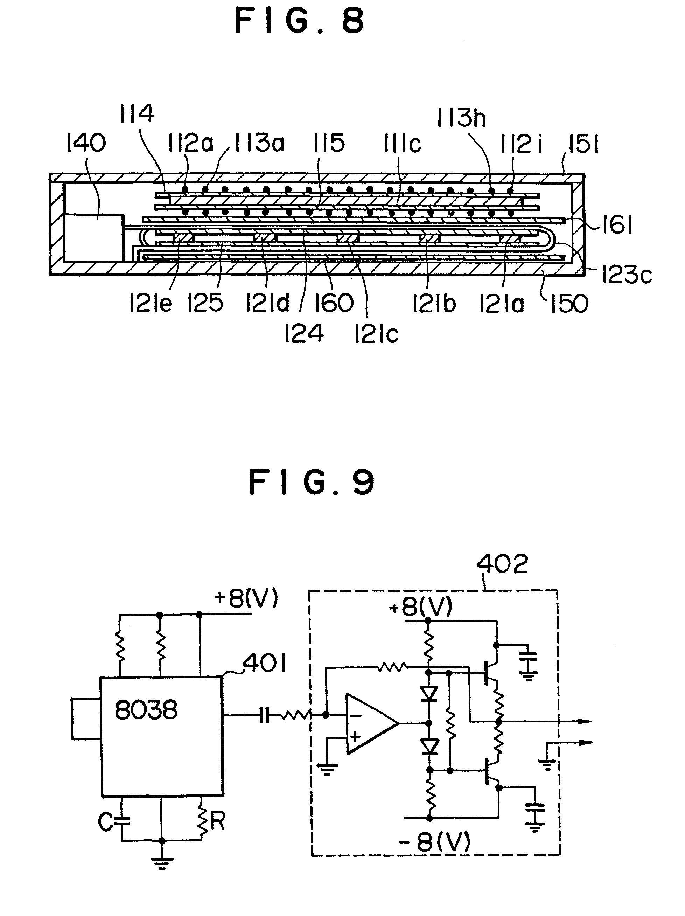

Fig. 7 is a partly cut-away exploded perspective view showing the major part of a tablet, while Fig. 8 is a sectional view of an essential part.

An X-direction position detecting section 110 is composed of elongated magnetic bodies 111a-111e, exciting lines 112a to 112i, detecting lines 113a to 113h and insulating sheets 114 and 115. The magnetic bodies 111a to 111e are sandwiched between both insulating sheets 114 and 115 such as to extend in an X-direction in parallel with one another.

The magnetic bodies 111a to 111e are made of a material which can hardly be magnetized even when approached by a magnet, i.e., a material having a small coercive force and a high

magnetic permeability ($\mu$). Examples of such a material are amorphous alloys, permalloys and so forth. A typical example of the amorphous alloys usable as the material of the magnetic bodies 111a to 111e is an alloy expressed by $Fe_{79}B_{16}Si_5$ (atom %) which has a coercive force of 0.2 Oe and a magnetic permeability of 14,0000. The magnetic bodies 111a to 111e have an elongated thin web-like form with a rectangular cross-section or an elongated linear form with a circular cross-section.

When the thin web-like form is adopted, the magnetic body preferably has a width of about several millimeters and a thickness which ranges between several and several tens of micron meters ($\mu$m) because such a width and thickness facilitate its production and ensures an excellent performance. In general, amorphous alloy can be produced in the form of a thin ribbon having a thickness of 20 to 50$\mu$m, so that the magnetic bodies can be produced by cutting such ribbons into segments. The amorhous alloy can be produced also in the form of a line having a circular cross-section, which line may be cut into segments to be used as the magnetic bodies.

Each of the exciting lines 112a to 112i has an upper half part laid on the upper side of the insulating sheet 114 and a lower half part laid in contact with the lower side of the insulating sheet 115. The upper and lower half parts of respective exciting lines 112a to 112i are connected at their adjacent ends to each other. In addition, the other ends of the lower half parts of the exciting lines 112a, 112b, 112c , 112d, 112e, 112f, 112g and 112h are connected to the other ends of the upper half parts of the exciting lines 112b, 112c, 112d, 112e, 112f, 112g, 112g, 112h and 112i, respectively. Thus, the exciting lines 112a to 112i are connected in series, and the other end of the upper half part of the exciting line 112a and the other end of the lower half part of the exciting line 112i are connected to the driving current source 400. The exciting lines 112a to 112i are arranged at a predetermined pitch such as to orthogonally cross the magnetic bodies 111a to 111e.

Each of the detecting lines 113a to 113h has an upper half part arranged on the upper side of the insulating sheet 114 and a lower half part arranged to be in contact with the lower side of the insulating sheet 115. The upper and lower half parts of each detecting line are connected at their one ends. The other ends of the upper half parts of the detecting lines 113a to 113h are connected to a multiplexer 130, while the other ends of the lower half parts of the same are grounded commonly. The detecting lines 113a to 113h are arranged between adjacent exciting lines 112a to 112i such as to orthogonally cross the magnetic bodies 111a to 111e.

A Y-direction position detecting section 120 is composed of elongated magnetic bodies 121a to 121e, exciting lines 122a to 122i, detecting lines 123a to 123h and insulating sheets 124 and 125. The construction of the Y-direction position detecting section 120 is substantially identical to that of the X-direction position detecting section 110. The exciting lines 122a to 122i are connected to the driving current source 400, while the detecting lines 123a to 123h are connected at their one ends to a multiplexer 140 and commonly grounded at their other ends.

The Y-direction position detecting section 120 is secured to the inner bottom surface of a non-magnetic metallic case 150 through an insulating sheet 160, while the X-direction position detecting section 110 is superposed to the Y-direction position detecting section as closely as possible thereto through the intermediary of an insulating sheet 161, such that the magnetic bodies, exciting lines and the detecting lines of both sections 110,120 cross orthogonally. The X- and Y-position detecting sections are fixed by an adhesive as required. The multiplexers 130 and 140 also are mounted and fixed in the metallic case 150.

A cover 151 made of a non-magnetic metallic material is fitted to the top of the metallic case 150.

Fig. 9 shows a practical example of the driving current source 400. The driving current source has a function generator 401 which may be an IC 8038 made by Inter Sil. adapted to produce a sine wave signal of a suitable frequency which is determined by the capacitance of the capacitor C and the resistance of the resistor R. A numeral 402 denotes a power driver which is constituted by an operation amplifier and a differential amplifier. The power driver is adapted to effect a current-amplification of the sine wave signal and to deliver the amplified signal to the exciting lines 112a to 112i and 122a to 122i.

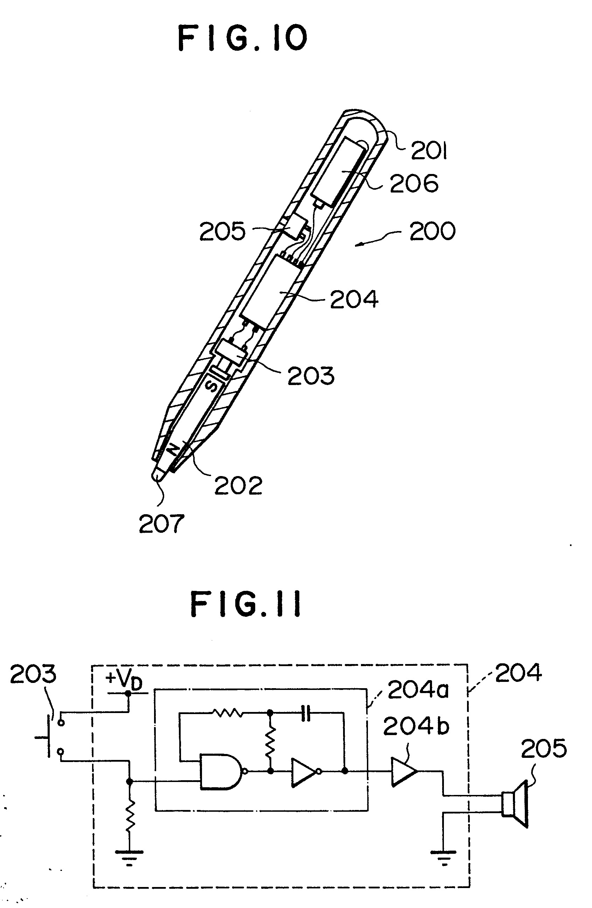

Fig. 10 is a sectional view of a practical example of the magnetic pen 200, while Fig. 6 is an electric circuit diagram of the same. The magnetic pen 200 has a pen-shaped vessel 201 made of a plastic or a similar material. A bar magnet 202 is axially slidably mounted on one end of the vessel 201, such that one end of the bar magnet 202 is projectable from the end of the vessel 201. An operation switch 203 is mounted such as to oppose the other end of the bar magnet 202. A supersonic signal generator 204, battery 206 and a supersonic transmitter 205 are accommodated by the vessel 201 at suitable portions thereof. A rubber cover 207 is secured to the end of the bar magnet 202. In operation, the user holds the vessel 201 and presses the end of the bar magnet 202 covered by the rubber cover 207 onto the input surface. As a result, the bar magnet 202 is moved into the vessel 201 thus turning the switch 203 on, thereby activating the oscillation circuit 204a and the amplifier 204b in the generator 204, so that a signal representing the commencement of the measurement, e.g., a continuous pulse signal of a predetermined frequency, is changed into a supersonic signal which is then transmitted from the transmitter 205.

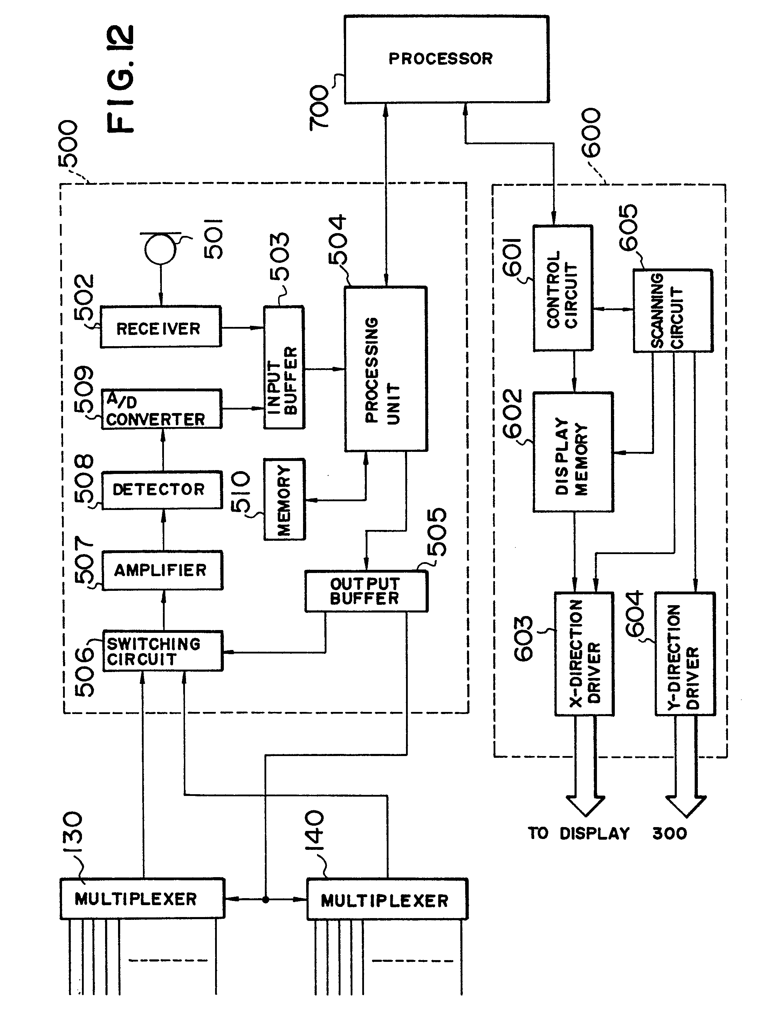

Fig. 12 is a block diagram of an essential portion of the device of the invention. The operation of the device and the functions of the blocks will be explained hereinunder.

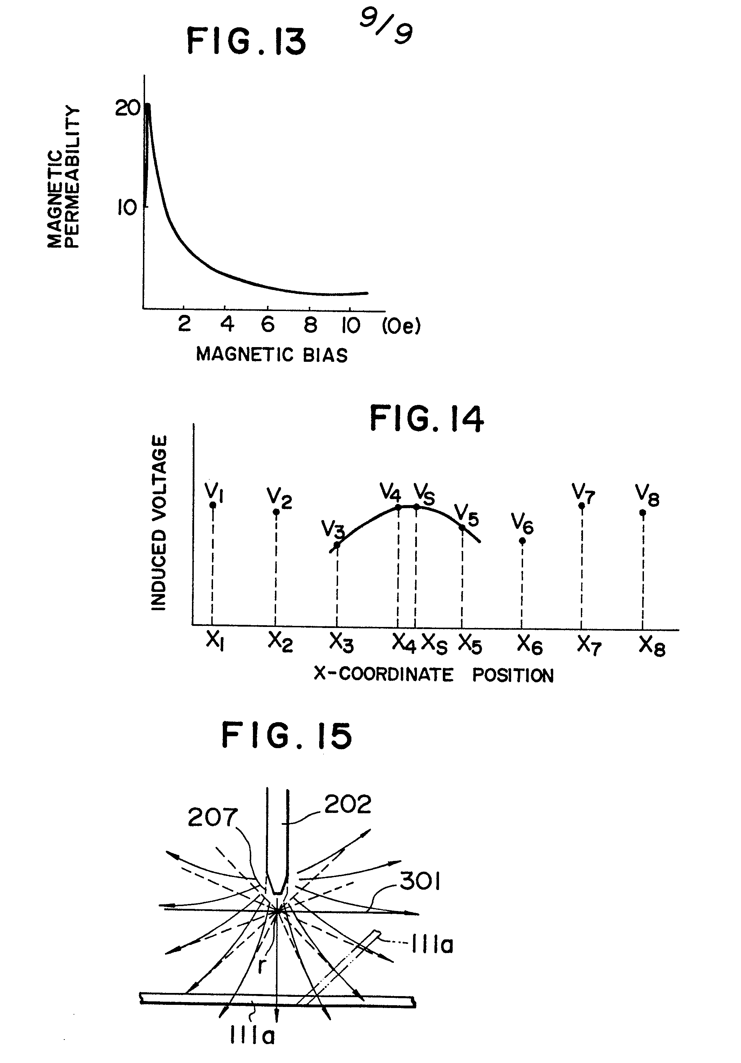

As a result of the supply of the A.C. currents to the exciting lines 112a to 112i and 122a to 122i, voltages are induced in the detecting lines 113a to 113h and 123a to 123h by electromagnetic induction. Since this electromagnetic induction is made through the magnetic bodies 111a to 111e it increases as the magnetic permeability of the magnetic bodies 111a to 111e and 121a to 121e is increased. On the other hand, the magnetic permeabilities of the magnetic bodies 111a to 111e and 121a to 121e are changed in a manner shown in Fig. 13 by an external magnetic bias. It will be seen that the magnetic permeability is drastically decreased as the magnetic bias is increased. Therefore, if a magnetic bias is applied to the magnetic bodies 111a to 111e and 121a to 121e, the levels of the voltages induced in the detecting lines 113a to 113h and 123a to 123h by the A.C. currents in the exciting lines 112a to 112i and 122a to 122i is decreased drastically.

Referring again to Fig. 6, it is assumed here that the position appointing magnetism generator 200 is held in contact with the input surface (top surface of the display 300 in this case) at a position A which is spaced in the X-direction by a distance $x_s$ from the detecting line 113a and in the Y-direction by a distance $Y_s$ from the detecting line 123a, and a magnetic bias of a level just capable of reducing the magnetic permeability is applied to the magnetic bodies 111b and 121d.

In this state, induced voltages $V_1$ to $V_8$ are generated in the X-direction detecting lines 113a and 113h as shown in Fig. 14. More specifically, in Fig. 14, the axis of abscissa represents the X-direction coordinate position in which $x_1$ to $x_8$ repesent the positions of the detecting lines 113a to 113h, while the axis of coordinate represents the voltage. It will be seen that the voltages $V_1$ to $V_8$ draw a curve which has a peak at a point corresponding to the position A. At each side of the peak position, the voltage is once decreased and then increased again as the distance from the peak position is increased. This is attributable to the fact that the magnetic flux produced by the bar magnet 202 coming into the magnetic body 111b crosses the magnetic body 111b substantially orthogonally when the magnetic body 111b is at the position just under the bar magnet 200 so that the magnetic permeability is influenced only slightly, whereas, when the bar magnet 200 is disposed at either one side of the magnetic body 111b, the magnetic flux passing the magnetic body 111b in the longitudinal direction thereof is increased to cause an appreciable reduction in the magnetic permeability.

On the other hand, since the end of the bar magnet 202 of the magnetic pen 200 is pressed onto the input surface, the switch 203 is turned on so that the supersonic signal indicative of the commencement of the measurement is transmitted from the transmitter 205 and is received by a receiver 501. The received signal is then amplified and shaped by a receiving device 502 and sent to an input buffer 503. A computing circuit 504 reads the measurement commencement signal from the input buffer, thus acknowledging the commencement of the measurement. Then, the computing circuit 504 delivers control signals to a switching circuit 506 and a multiplexer 130 through an output buffer 505, thus allowing the voltages induced in the X-direction detecting lines 113a to 113h to be successively delivered to the amplifier 507. The induced voltages are amplified by an amplifier 507 and, after a rectification and conversion into D.C. voltages by a detector 508, converted into digital values by an analog-to-digital (A/D) converter 509. These digital signals are delivered to the computing circuit 504 through the input buffer. The computing circuit 504 then temporarily stores the digital values corresponding to the induced voltages in a memory 510 thereof and computes the X-direction coordinate value $x_5$ of the point A using the thus stored data.

Various methods can be used for the computation of the coordinate value $x_s$.

One of the computing methods for computing the coordinate value $x_s$ will be explained hereinunder. The waveform of the portion of the curve drawn by the induced voltages around the peak point is approximated by a suitable function. For instance, representing the pitch of the detecting lines 113a to 113h by $\Delta x$, the portion of the curve between the xoordinate positions $x_3$ and $x_5$ is approximated by a function of secondary degree shown by the solid line curve in Fig. 14. Using this function, the coordinate value of the peak position can be determined as follows:

The following relationships are obtained from the coordinate positions of respective detecting lines and the voltages induced in these detecting lines:

$$V_3 = a(x_3 - x_s)^2 + b \quad \ldots(1)$$

$$V_4 = a(x_4 - x_s)^2 + b \quad \ldots(2)$$

$$V_5 = a(x_5 - x_s)^2 + b \quad \ldots(3)$$

where, a and b are constants ( $a < 0$ )

The following relationships also exist:

$$x_4 - x_3 = \Delta x \quad \ldots(4)$$

$$x_5 - x_3 = 2\Delta x \quad \ldots(5)$$

The following equation (6) is derived by trimming the formulae (2) and (3) after substituting formulae (4) and (5) to the formulae (2) and (3)

$$x_s = x_3 + \frac{\Delta x}{2} \left( \frac{3V_3 - 4V_4 + V_5}{V_3 - 2V_4 + V_5} \right)$$

.....(6)

Therefore, the computing circuit 504 can compute the X-coordinate position $x_s$ by substituting the voltages $V_3$, $V_4$, $V_5$ and the known coordinate value $x_3$ of the detecting line 113c to the equation (6).

The computing circuit 504 then detects the voltage values around the peak from the values of induced voltages. This detection can be made, for example, by comparing the values of successive induced voltages. Assuming here that a voltage $V_k$ is greater than the preceding voltage $V_{k-1}$ and also greater than the succeeding voltage $V_{k+1}$, the voltage Vk is judged to be a voltage closest to the peak, i.e., as the voltage $V_4$, while the voltages $V_{k-1}$ and $V_{k+1}$ are judged as being the voltages $V_3$ and $V_5$. The computing circuit 504 then computes the X-coordinate position $x_s$ in accordance with the formula (6) mentioned before,

using the voltages $V_{k-1}$, $V_k$ and $V_{k+1}$ as the voltages $V_3$, $V_4$ and $V_5$, respectively, and using also the known coordinate value of the corresponding detecting line. The thus obtained X-direction coordinate value $x_s$ is delivered to and temporarily stored in the processor 700.

Then, the computing circuit 504 delivers a control signal to the switching circuit 506 and the multiplexer 140 through an output buffer 505, and successively receives the voltages induced in the Y-direction detecting lines 123a to 123h, and computes the Y-coordinate value $Y_s$ in the same way as the computation of the X-direction coordinate position. The thus determined coordinate value $Y_s$ is delivered to the processor 700. This operation is repeated so that the data of the positions successively appointed are obtained.

The position data constituted by X- and Y-direction coordinate values stored in the processor 700 is delivered to a display memory 602 through a control circuit 601 in the display control circuit 600, and is stored in a predetermined order. The data is then successively read in accordance with the timing pulses from the control circuit 601 and delivered to an X-direction driver 603 and a Y-direction driver 604. The X-direction driver 603 and the Y-direction driver 604 receive scanning pulses generated by a scanning circuit 605 in synchronism with the timing pulses. The drivers 603 and 604 then drive the electrodes on the display 300 corresponding to the X- and Y-direction coordinate values on the display 300, such that the position appointed on the tablet 100 is displayed at the identical position on the display 300. It is, therefore, possible that patterns and letters written by the magnetic pen 200 from the upper side of the display 300 on the tablet are displayed by luminescence in identical forms on the display 300.

If the processor 700 is provided with a suitable editing function, the edition such as addition and deletion of words and characters can be made easily. The device of the invention can be used also as a CAD or a CAM provided that a suitable pattern processing function is added. The device of the invention can be used also as a menu inputting device. It is possible even to obtain a hard copies of the position data, i.e., hard copies of patterns and characters, provided that the device is connected to a known plotter or a printer through the processor 700.

Fig. 15 shows the manner in which the position is appointed by means of the magnetic pen 200.

The magnetic flux emerging from the end of the bar magnet 202 of the magnetic pen 200 can be approximated by a magnetic flux which is assumed to be developed from a point r on the extension of the axis of the bar magnet 202. Therefore, if the input surface, i.e., the top surface 301 of the display 300, is formed within the distance r from the magnetic bodies 111a to

111e and 121a to 121e, and if the rubber cover 207 is formed such that the end of the cover is at the same position as the point r, the directions of the magnetic field with respect to the magnetic bodies 111a to 111e and 121a to 121e are not changed, even if the bar magnet 202 is inclined with respect to the magnetic bodies 111a to 111e and 121a to 121e. In Fig. 10, the bar magnet 202 is inclined with respect to the magnetic body 111a which is shown by two-dot-and-dash line. Thus, the position can be appointed safely substantially irrespective of the inclination of the bar magnet 202 with respect to the magnetic bodies. In fact, experiment showed that the position can be appointed within an error of less than + 0.5 mm when the bar magnet was inclined within the range of + 30$^{\circ}$ at the input plane height of 12 mm.

The numbers of the magnetic bodies, exciting lines and the detecitng lines are only illustrative, and the apparatus can have any desired numbers of these constituents. Expriments show that a satisfactory high precision of position detection can be attained when the detecting lines are arranged at a pitch of 2 to 6 mm. It is to be understood also that the bar magnet used in the described embodiments is not exclusive, and various other magnets such as a tabular magnet, ring magnet, polygonal magnet and even a solenoid can be used as the position appointing magnetism generator.

It is also possible to use optical signals such as infrared rays as the measurement commencement signal which is transmitted from the magnetic pen 200 to the position detecting circuit 500 in place of the supersonic signal used in the described embodiment. It is to be understood also that, although in the described embodiment the measurement commencement signal is delivered by the magnetic pen, this is not exclusive and the measurement commencement signal may be delivered from a switch circuit means such as a keyboard on the position detecting circuit 500, since the function of the measurement commencement signal is to inform the computing circuit 504 of the timing of detection of the coordinate data.

In addition, the display area formed on the display 300 need not always be equal to the input area on the tablet: namely, the display area may be smaller or greater than the input area.

0172615

-28-

1. A liquid crystal panel display apparatus comprising: a generally rectangular tabular light guide plate having a flat upper surface, the underside of said light guide plate having at least one tapered surface which extends from a portion of said light guide plate near one longitudinal end surface of said light guide plate towards the other end such as to progressively approach said flat upper surface of said light guide plate; and a transmission-type liquid crystal cell device provided on the portion of said upper surface opposing said tapered surface.

2. A liquid crystal panel display apparatus according to claim 1, further comprising fine convexities and concavities formed on said tapered surface of said light guide plate, and a reflecting mirror disposed such as to oppose said tapered surface of said light guide plate.

3. A liquid crystal panel display apparatus according to Claim 1 or Claim 2, comprising a light source means disposed in the vicinity of said one end surface of said light guide plate.

4. A liquid crystal panel display apparatus according to Claim 2 or Claim 3, wherein a data inputting tablet is disposed under said light guide plate.

5. A liquid crystal panel display apparatus according to any one of the preceding claims wherein the light guide plate is of an acrylic plastics material.

1/9

# FIG. 1

F I G. 2

0172615

3/9

FIG. 3

FIG. 4

FIG. 5

FIG. 6

FIG.7

# FIG. 8

# FIG. 9

# FIG. 10

# FIG. 11

FIG. 12

8/9

0172615

0172615

# FIG.13

# FIG.14

# FIG.15